Europäisches Patentamt

European Patent Office

Office européen des brevets

(19)

(11) Veröffentlichungsnummer: **0 156 337 B1**

(12) **EUROPÄISCHE PATENTSCHRIFT**

(45) Veröffentlichungstag der Patentschrift: **12.06.91**

(51) Int. Cl.⁵: **B60R 22/38**, B60R 22/36

(21) Anmeldenummer: 85103458.7

(22) Anmeldetag: 23.03.85

(54) Selbstsperrender Gurtaufroller für Sicherheitsgurte.

(30) Priorität: 26.03.84 DE 3411067

(43) Veröffentlichungstag der Anmeldung:
02.10.85 Patentblatt 85/40

(45) Bekanntmachung des Hinweises auf die
Patenterteilung:
12.06.91 Patentblatt 91/24

(84) Benannte Vertragsstaaten:
DE FR GB IT SE

(56) Entgegenhaltungen:
DE-A- 2 646 238
DE-A- 3 017 097
GB-A- 2 090 119

(73) Patentinhaber: AUTOFLUG GMBH
Industriestrasse 10 Postfach 1180
W-2084 Rellingen(DE)

(72) Erfinder: Butenop, Klaus, Dipl.-Ing.
Obendeich 29
W-2209 Herzhorn(DE)

(74) Vertreter: Müller, Karl-Ernst, Dr. et al
Patentanwälte Becker & Müller Eisenhüttenstrasse 2
W-4030 Ratingen 1(DE)

**Beschreibung**

Die Erfindung betrifft einen selbstsperrenden Gurtaufroller für insbesondere Kraftfahrzeug-Sicherheitsgurte, mit einem Gehäuse und einer darin axial unverschieblich und radial unter der Wirkung von Blockierkräften verschieblich gelagerten Gurtauwickelwelle, die sich mit ihren Enden durch Durchtrittsöffnungen des Gehäuses erstreckt und in der Ebene der Durchtrittsöffnungen jeweils mit einer zur Verrastung ausgebildeten Einrichtung versehen ist, von denen eine beim Auftreten von Blockierkräften, die einen vorbestimmten Wert nicht überschreiten, in eine feste Innenverzahnung einer Durchtrittsöffnung eingreift und die beide beim Auftreten von die vorgenannten Blockierkräfte übersteigenden Blockierkräften unter radialer Verlagerung der Welle in feste Innenverzahnungen beider Durchtrittsöffnungen eingreifen, so daß sich entweder eine einseitige oder eine doppelseitige Verrastung und damit Blockierung der Gurtaufwickelwelle ergibt. Blockierung der Gurtaufwickelwelle ergibt.

Bei einem bekannten Gurtaufroller dieser Gattung (DE-A- 30 17 097) ist eine zweiseitige Blockierung der Welle vorgesehen, und zwar differenziert für grundsätzlich zwei verschiedene Belastungsfälle, nämlich den sog. Normalfall und den sog. Chrashfall. Wenn die Gurtbandkräfte ein übliches normales Maß, wie es z. B. vorkommt, wenn das Fahrzeug in einer alltäglichen Verkehrssituation abgebremst wird, nicht überschreiten, reicht die Sperrwirkung eines an einer Seite der Gurtaufwickelwelle angeordneten Sperrgliedes aus, um den Sicherheitsgurt und die angeschnallte Person zurückzuhalten. Treten nun aber bei einem Zusammenstoß o. dgl. über das Normale hinausgehende, sehr viel höhere Gurtbandkräfte auf, werden nach dem Einrasten des Sperrgliedes so hohe Zugkräfte und daraus an der Welle bzw. am Wickel resultierende Radialkräfte wirksam, daß diese die Welle insgesamt radial verlagern und dadurch auch die Rasteinrichtung am anderen Wellenende zum Eingriff bringen. Bei dem bekannten Gurtaufroller besteht das Sperrglied aus einem Riegel, der in einer Ausnehmung der zugeordneten Durchtrittsöffnung im Gehäuse gelagert und in die Verzahnung einer damit fluchtenden Zahnscheibe hinein verschwenkbar ist, wobei an dem Riegel ein von der Selbstsperreinrichtung gesteuertes Betätigungselement in Form eines Stiftes angeordnet ist. Der Riegel erfüllt somit eine Doppelfunktion, weil er einerseits selbst ein Blockierelement für den normalen Belastungsfall ist und andererseits bei einem Unfall eine Zusatzblockierung einleitet, indem er die Auslenkung der Welle und damit ihre beiderseitige Blockierung durch Eingriff der beiderseitigen Zahnscheiben in die Innenverzahnungen der Durchtrittsöffnungen des Gehäuses bewirkt. Dabei kann die Verzahnung der Durchtrittsöffnung an der dem Riegel gegenüberliegenden Gehäuseseite auf einen Sektor des Umfangs beschränkt und die Gurtaufwickelwelle außerhalb des Gehäuses an seitlichen Gehäusedeckels gelagert sein.

Mit der bekannten Gestaltung ist der Nachteil verbunden, daß insbesondere im Normalfall der Blockierung der Gurtaufwickelwelle als auch zu Beginn des sogenannten Crash-Falles allein der am Gehäuse gelagerte Riegel die Krafteinleitung für die Blockierung bzw. die radiale Verlagerung der Gurtaufwickelwelle übernimmt; insofern sind die Kraftaufnahme und die Kraftübertragung über den einzelnen und nur mit einem einzigen Verzahnungsvorsprung versehenen Riegel nicht hinreichend sicher ausgebildet.

Der Erfindung liegt daher die Aufgabe zugrunde, einen Gurtaufroller mit einer Bauart gemäß den gattungsgemäßen Merkmalen derart zu verbessern, daß insbesondere für den sogenannten Normalfall der Blockierung der Gurtaufwickelwelle unterhalb der Ansprechschwelle für die radiale Verlagerung der Gurtaufwickelwelle der Zahneingriff für die Blockierung der Gurtaufwickelwelle verbessert und die Kraftübertragung sicher ausgestaltet ist.

Die Lösung dieser Aufgabe ergibt sich aus dem Hauptanspruch; vorteilhafte Ausgestaltungen und Weiterbildungen der Erfindung sind in den Unteransprüchen angegeben.

Aus der GB-A-2 090 119 ist ein Gurtaufroller mit einer einseitig angeordneten Sperrvorrichtung bekannt, bei welchem außerhalb der Ebene der Durchtrittsöffnung für die Gurtaufwickelwelle in dem Gurtaufrollergehäuse an der diese Ebene überragenden Wellenstirn exzentrisch ein Sperrglied mit mehreren Zahnvorsprüngen angeordnet ist, welches radial zum Eingriff in einen außen am Gehäuse des Gurtaufrollers zusätzlich angebrachten Druckring mit einer Innenverzahnung ausschwenkbar ist. Die Gurtaufwickelwelle weist dabei ein Rechteckprofil auf mit einer rechteckigen Ausnehmung, in die das Sperrglied die Wellenstirn quer durchgreifend eingelegt ist. Bei diesem Gurtaufroller erfolgt die Verriegelung außerhalb der Ebene der Durchtrittsöffnungen der Erfindung im Gehäuse des Gurtaufrollers.

Die Erfindung sieht im einzelnen vor, daß als die eine Verriegelungseinrichtung, welche insbesondere im Normalfall und unterhalb der Ansprechschwelle für die radiale Verlagerung der Gurtaufwickelwelle wirksam wird, in die betreffende Wellenstirn ein exzentrisch zur Wellenachse schwenkbeweglich gelagertes und mit zahnförmigen Rastvorsprüngen versehenes Sperrglied in einer Vertiefung bündig eingebettet ist, wobei die in der Projektion der Vertiefung befindliche ringförmige Umfangsfläche der Wellenstirn mit Ausnahme einer Unterbrechung zum Durchtritt der Rastvorsprünge des Sperrgliedes eine zentrisch in der zur Verrastung gestalteten zugeordneten Durchtrittsöffnung des Gehäuses angeordnete Nabe bildet, wobei die zur Aufnahme des Sperrgliedes vorgesehene Vertiefung im wesentlichen entsprechend der Umrißgestaltung des Sperrgliedes konturiert ist und die Räume, in denen sich das Sperrglied bei dessen Schwenkbewegung verschiebt, entsprechend sektorförmig umgrenzt sind.

Mit der Erfindung ist zunächst der Vorteil verbunden, daß auch bei Anordnung der Blockierverzahnung für den Gurtaufroller in den Durchtrittsöffnungen des Gehäuses nun ein Sperrglied mit mehreren Zahnvorsprüngen radial aus dem in der Durchtrittsöffnung umlaufenden runden und nabenartigen Wellenprofil ausschwenkbar ist, so daß bei ausgeschwenktem Sperrglied durch den Eingriff mehrerer Zahnvorsprünge die Kraftüberleitung von der Welle auf das Gehäuse verbessert ist, ohne daß es dazu eines gesonderten Druckringes bedarf; damit kann in vorteilhafter Weise die axiale Baubreite des Gurtaufrollers gering gehalten werden.

Ein weiterer Vorteil ist zu nennen, daß mit der Ausbildung der Welle als Nabe, die in der Durchtrittsöffnung umläuft, eine Lagerung verbunden ist, so daß auf zusätzliche Lagerhilfen aus Kunststoff in der Ebene der Durchtrittsöffnungen oder sonstige besondere Lager- oder Trennungsscheiben verzichtet werden kann. Für die Kraftübertragung steht weiterhin ein volles und das Sperrglied umgebendes Wellenprofil zur Verfügung, welches durch Abstützung an den Durchtrittsöffnungen des Gehäuses eine gute Kraftübertragung zwischen Sperrglied und Welle sicherstellt.

Nach einem Ausführungsbeispiel der Erfindung ist vorgesehen, daß diejenige Kante der Gurtaufwickelwelle, gegen die sich eine entsprechende Kante des Sperrgliedes nach dessen Auslenkung und Einrastung in gehäusefeste Rastmittel als Widerlager anlegt, mit einer durch Abbrechen oder Zerquetschen hinsichtlich des Anlagepunktes veränderlichen Gestaltung versehen ist, so daß sich dort eine in Grenzen nachgiebige Zone ergibt, die die Endstellung des Sperrgliedes in Abhängigkeit von den am Sicherheitsgurt auftretenden Kräften reguliert. Dabei kann die nachgiebige Kante mittels entsprechender Ausnehmungen durch die zwischen den Ausnehmungen in der Kantenlinie verbleibenden Werkstoffspitzen gebildet sein. Hiermit ist die Wirkung verbunden, daß bei auftretender Hochbelastung und entsprechender Beeinträchtigung der nachgiebigen oder "weichen Zone" eine Vergrößerung des Winkels erzielbar ist, um den das Sperrglied von seiner Ruhestellung in seine Sperrstellung vorrückt, was gleichzeitig eine Vertiefung und damit Verstärkung der Verrastung zur Folge hat. Grundsätzlich läßt sich dieser Gedanke einer wiechen Zone zu Differenzierug zwischen zwei Belastungszuständen und entsprechend verschiedene Verrastungsintensitäten nicht nur bei einem Gurtaufroller mit den eingangs beschriebenen Gattungsmerkmalen verwirklichen, sondern bei Gurtaufrollern des sog. radialen Blockierprinzips allgemein, zumindest überall dort, wo ein Sperrglied radial ausgelenkt wird und mit einer seiner Kanten gegen eine Bezugskante des zugeordneten Wellenendes oder eines entsprechenden Bauteiles, welches mit der Gurtaufwickelwelle verbunden ist, zur Anlage kommt. Die weiche Zone gestattet im Normalbetrieb ein schnelleres Verhalten der Blockiervorrichtung, insbesondere bei der Rückkehr des Sperrgliedes in die Ruhestellung, weil der Weg, den das Sperrglied in beiden Richtungen zurücklegen muß, kürzer gehalten werden kann.

Nach einer weiteren Ausführungsform der Erfindung ist vorgesehen, daß die Gurtaufwickelwelle an beiden Enden mit Lagerzapfen versehen ist, die sich an beiden Seiten des Gurtaufrollers in Lagerschalen aus nachgiebigem Werkstoff abstützen, so daß die Gurtaufwickelwelle in Grenzen radial verschieblich im Gehäuse angeordnet ist. Dabei können die Lagerschalen zugleich als Aufnahme und Abdeckung für Funktionsteile des Gurtaufrollers gestaltet sein, insbesondere zur Aufnahme der Rückspulfeder und zur Aufnahme und Abdeckung des Steuersystems für das Sperrglied. Hiermit ist die Wirkung verbunden, daß die unter dem Zug am Gurtband mögliche Querverschiebung der Gurtaufwickelwelle einfach aufgrund der Nachgiebigkeit des Werkstoffes für die Schalen, in denen sich die Lagerzapfen der Welle abstützen, durchführen läßt, indem sich die Schalen beispielsweise entsprechend ein wenig verbiegen und/oder verformen, d.h. sie haben einen gummiartigen Charakter. Hiermit ist eine wesentliche Vereinfachung der Bauweise verbunden.

In der Zeichnung ist ein Ausführungsbeispiel der Erfindung wiedergegeben, welches nachstehend beschrieben wird. Es zeigen:

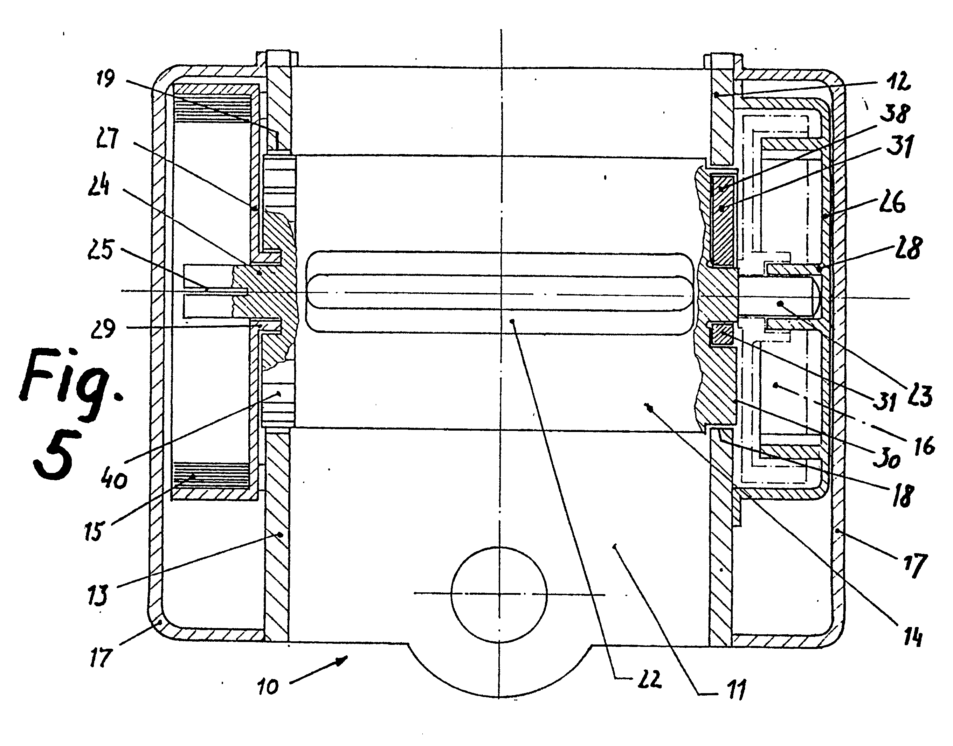

Fig. 1 eine Ansicht auf einen Querschnitt durch einen Gurtaufroller für Sicherheitsgurte gemäß der Linie I - I in Fig. 5, wobei sich das Sperrglied in Ruhestellung befindet,

Fig. 2 eine Ansicht entsprechend Fig. 1, wobei sich das Sperrglied in einer Sperrstellung befindet,

Fig. 3 eine Ansicht auf einen Querschnitt gemäß der Linie III - III in Fig. 5, wobei sich die Verzahnung am diesseitigen Ende der Gurtaufwickelwelle in nicht verrasteter Stellung befindet,

Fig. 4 eine Ansicht entsprechend Fig. 3 mit eingerasteter Verzahnung,

Fig.5 einen teilweisen Längsmittenschnitt durch den Gurtaufroller gemäß der Linie V - V in Fig. 1.

Der Gurtaufroller ist aus einem U-förmigen Gehäuse 10 mit Grundplatte 11 und zwei Gehäuseschenkeln 12, 13, ferner aus einer Gurtaufwickelwelle 14, einer Rückspulfeder 15 und einer Selbstsperreinrichtung 16, der sog. Automatik, zusammengesetzt. Die Außenseiten der Gehäuseschenkel 12, 13 und die dort in Erscheinung tretenden Bauteile sind durch je eine übereinstimmende Abdeckkappe 17 abgedeckt und gegen äußere Einwirkungen geschützt. Während das Gehäuse 10 aus Stahlblech hergestellt ist, besteht die Gurtaufwickelwelle 14 aus gegossenem Metall (Druckguß),und die Abdeckkappen 17 sind aus Kunststoff gefertigt.

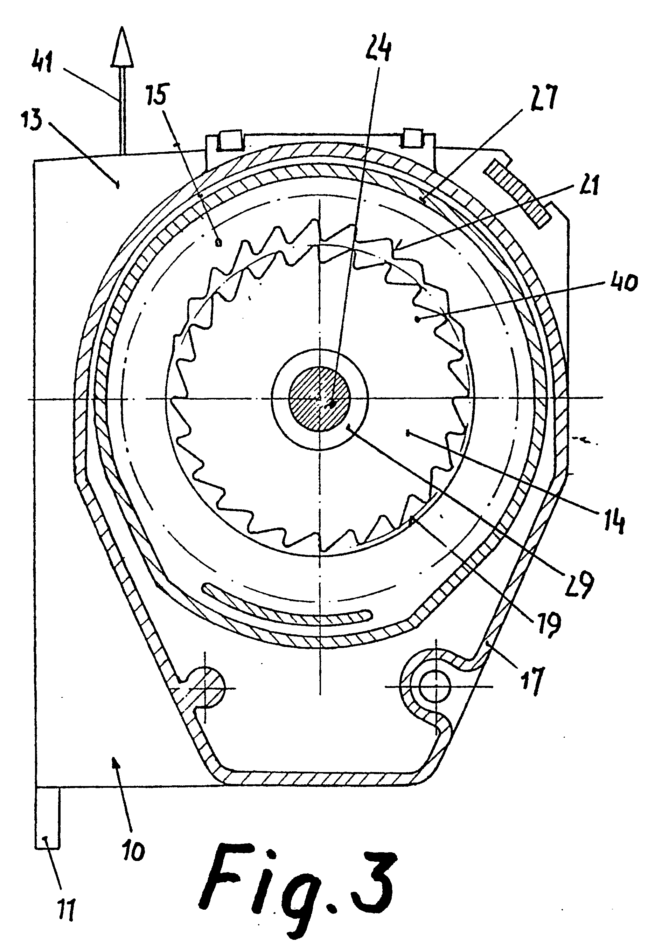

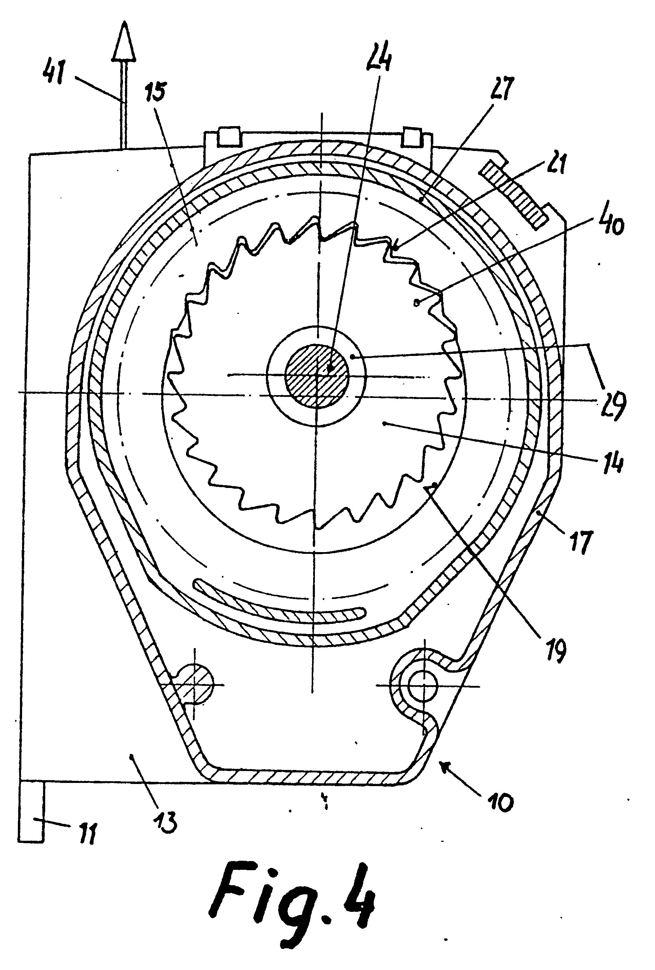

In den Gehäuseschenkeln 12, 13 ist jeweils eine im wesentlichen kreisförmige Durchtrittsöffnung 18, 19 für die Gurtaufwickelwelle 14 enthalten, wobei die Durchtrittsöffnung 18 eine rundum verlaufende Innenverzahnung 20 hat. Die Durchtrittsöffnung 19 ist, wie sich aus den Figuren 3 und 4 entnehmen läßt, nur teilweise innenverzahnt, und zwar im Bereich eines oberen Sektors, wo sich eine Verzahnung 21 befindet, die in der Mitte am tiefsten ist und deren Zähne nach den Seiten hin fortlaufend flacher werden. Die Gurtaufwickelwelle 14 lagert mit ihren beiden Stirnenden in den Durchtrittsöffnungen 18, 19, ohne deren Innenrand zu berühren, so lange nicht besondere Umstände vorliegen. Die als ganzes im wesentlichen zylindrische Welle 14, die in ihrem mittleren Bereich einen Befestigungsschlitz 22 für das Ende des nicht dargestellten Gurtbandes aufweist, hat beidseitig axiale Lagerzapfen 23, 24, wobei der Zapfen 24 mit einem Querschlitz 25 zur Aufnahme des inneren Endes der Rückspulfeder 15 versehen ist. Jeder Lagerzapfen 23, 24 stützt sich an einem schalenförmigen Bauteil 26, 27 aus nachgiebigem Werkstoff, insbesondere Kunststoff, ab, wobei das Bauteil 26 zur Aufnahme der Selbstsperreinrichtung 16 und das Bauteil 27 zur Aufnahme der Rückspulfeder 15 vorgesehen sind. Jedes schalenförmige Bauteil 26, 27 hat eine zentrisch angeordnete Führungshülse 28, 29, die den zugeordneten Lagerzapfen der Welle 14 aufnimmt und führt. Aufgrund der Nachgiebigkeit der Schalenteile 26, 27, 28, 29 kann sich die Welle 14 bei entsprechendem Kraftangriff innerhalb gewisser Grenzen radial im Gehäuse 10 bewegen, d. h. ihre zentrische Lage in den Durchtrittsöffnungen 18, 19 verlassen.

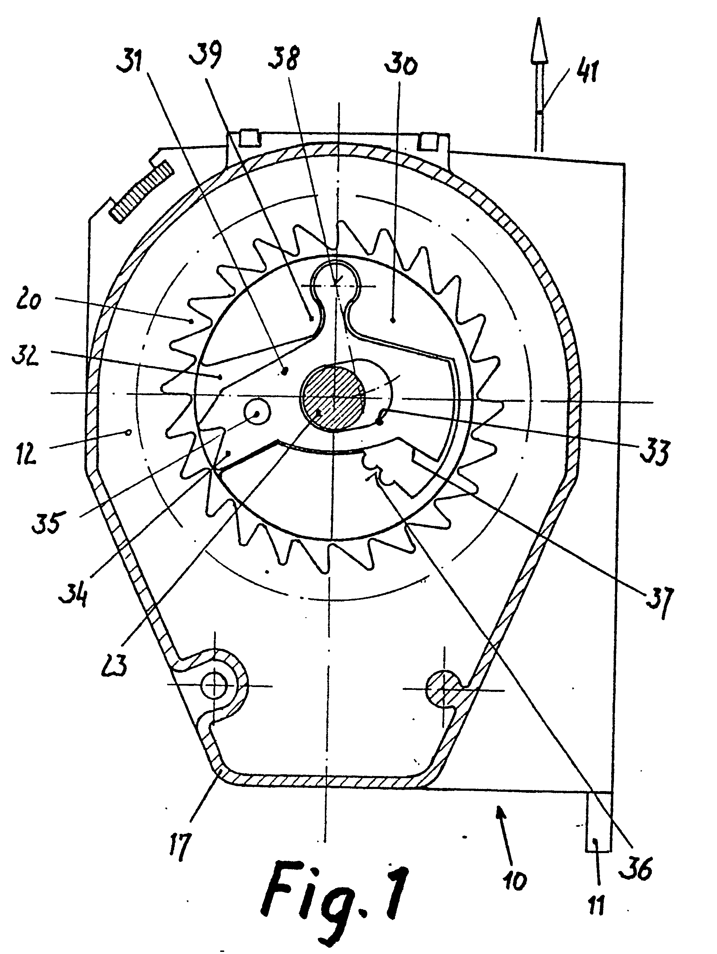

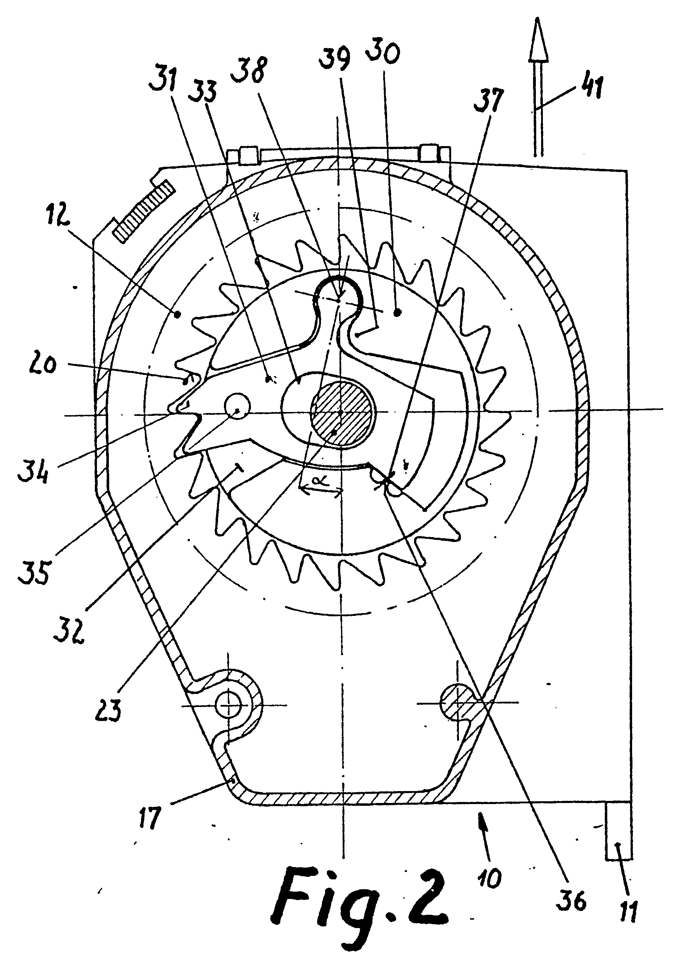

Auf der Seite des Gehäuseschenkels 12 (Fig. 1 und 2) hat die dortige Stirn 30 der Gurtaufwickelwelle 14 eine besondere Gestaltung, und zwar ist sie zur versenkten oder eingebetteten Aufnahme und schwenkbeweglichen Lagerung eines Sperrgliedes 31 ausgebildet. Hierzu hat die Wellenstirn 30 eine Vertiefung 32 für das Sperrglied 31, und zwar derart, daß sich das Sperrglied bündig in der Ebene des Gehäuseschenkels 12 befindet. Dabei wird das beispielsweise aus Stahlblech ausgestanzte Sperrglied mittels eines Langloches 33 von dem dortseitigen Lagerzapfen 23 der Welle 14 durchsetzt.

Das Sperrglied 31 ist gemäß Figur 1 und 2 nach Art eines Pendels ausgebildet und hat - vereinfacht ausgedrückt - die Form eines umgekehrten "T", wobei zu beachten ist, daß sich das so gestaltete Sperrglied mit der Welle 14 dreht und auf diese Weise gegenüber einem Betrachter alle möglichen Stellungen einnimmt, d. h. auch als stehendes oder liegendes "T" in Erscheinung tritt. Wegen der Darstellung in Figur 1 wird hier aber von umgekehrt T-förmig gesprochen. An dem einen freien Ende des T-Querbalkens sind zwei Sperrzähne 34 angeformt, die im Blockierfall zur Verrastung mit entsprechenden Zähnen der Innenverzahnung 20 bestimmt sind. Auf der Seite der Zähne 34 des Sperrgliedes 31 ist dieses mit einem Steuerstift 35 versehen, der vom Sperrglied aus in den Wirkungsbereich der im einzelnen nicht dargestellten Automatik 16 hineinragt, und von dort her beeinflußt wird, d. h. die Automatik 16 steuert über den Stift 35 die Bewegungen des Sperrgliedes 31. Im einzelnen ist diese Steuertechnik herkömmlich ausgebildet.

Am anderen freien Ende des Querbalkens des T-förmigen Sperrgliedes 31 sind Anschlagflächen vorgesehen, welche einerseits die Bewegungen des Sperrgliedes in der Vertiefung 32 der Wellenstirn 30 begrenzen und andererseits zur Übertragung der Blockierkräfte vom Gurtband über die Welle 14, das Sperrglied 31 und die Zähne 34, 20 auf das Gehäuse 10 und damit in das betreffende Fahrzeug dienen. Dabei liegen den Anschlagflächen des Sperrgliedes 31 entsprechende zugeordnete Anschlagflächen der Wellenstirn 30 bzw. der umlaufenden Kanten der Vertiefung 32 gegenüber, von denen eine Anschlagfläche 36 als unter bestimmten Bedingungen nachgiebige oder "weiche" Zone ausgebildet ist. Die nachgiebige oder weiche Wirkung dieser Anschlagfläche bzw. Zone kommt dadurch zustande, daß dort eine örtliche Gestaltung vorgesehen ist, die ein Abbrechen oder Zerquetschen von Material möglich macht, wenn ein genügend starker Druck seitens der zugeordneten Anschlagfläche 37 des Sperrgliedes 31 darauf ausgeübt wird. Gemäß Figur 1 sind in dem Flächenstück 36 Vertiefungen vorgesehen, zwischen denen zwei Materialspitzen stehengeblieben sind, die von der Fläche 37 bei hinreichender Kraftausübung zerdrückt werden können. Dies hat zur Folge, daß das Sperrglied 31 um einen entsprechenden Winkelbetrag weiter verschwenken kann.

Zum Verschwenken des Sperrgliedes 31 ist das freie Ende des aufrechten T-Balkens mittels einer entsprechenden Verdickung 38 als Drehachse für das Sperrglied ausgebildet, d. h. in der Stellung gemäß Figur 1 hängt das Sperrglied wie ein Pendel schwenkbeweglich an der Verdickung 38. Hierzu ist in die Vertiefung 32 der Wellenstirn 30 eine entsprechende Taillengestaltung 39 eingeformt, in der die Verdickung 38 lagert, ohne daß es eines zusätzlichen Befestigungsmittels für das Sperrglied 31 in der Vertiefung 32 bedarf.

Auf der Seite des Gehäuseschenkels 13 ist die Welle 14 in der Flucht der Durchtrittsöffnung 19 mit einer Außenverzahnung 40 versehen (Fig. 3 und 4), die bei radialer Verschiebung der Welle 14 ihre konzentrische Lage in der Durchtrittsöffnung 19 verläßt und mit der sektoralen Verzahnung 21 verrastet. Dabei entspricht die Lage der sektoralen Verzahnung 21 bezüglich ihrer Anordnung in der Durchtrittsöffnung 19 der Zugrichtung am Gurtband, welches in den Figuren 1 - 4 mittels eines Pfeiles 41 versinnbildlicht ist.

Der beschriebene Gurtaufroller funktioniert wie folgt: Wenn der Fahrzeuginsasse Platz genommen hat und sich anschnallen will, zieht er das Gurtband in gewohnter Weise über seinen Körper und steckt die Schloßzunge in das Gurtschloß (nicht dargestellt) ein. Hierdurch wird der Gurt von der Welle 14 abgewickelt, und zwar gemäß Figur 1 im Gegenuhrzeigersinn (Pfeil 41). Dabei nimmt das Sperrglied 31 die in Figur 1 wiedergegebene Stellung ein,d. h. seine Zähne 34 verbleiben innerhalb des Umrisses der Wellenstirn 30. Diese Stellung des Sperrgliedes 31 ist die Folge einer entsprechenden Steuerung seitens der Selbstsperreinrichtung 16, die den Stift 35 nach innen schwenkt. Die Verzahnung 40 am anderen Wellenende verbleibt konzentrisch in der Durchtrittsöffnung 19 und berührt die sektorale Verzahnung 21 nicht. Die Rückspulfeder 15 wird gespannt. Falls sich der angeschnallte Insasse ohne besondere Beschleunigung auf seinem Sitz nach vorn beugt, ändert sich an dieser Stellung der Teile nichts, und er kann das Gurtband weiter aus dem Gurtaufroller herausziehen. Lehnt sich der Insasse wieder zurück, spult die Feder 15 den Gurt wieder entsprechend auf die Welle 14 auf.

Wenn während der Fahrt ein Umstand eintritt, der entweder zu einem schnellen Gurtauszug aus dem Aufroller führt, indem sich der Insasse ruckartig nach vorn bewegt, oder der das fahrzeugsensitive System der Automatik 16 aktiviert, wird das Sperrglied 31 über den Steuerstift 35 ausgelenkt, und zwar bewegt sich das Sperrglied 31 in Figur 1 nach links, indem es um die Verdickung 38 im Uhrzeigersinn schwenkt. Dabei treten die Zähne 34 aus der Kontur der Welle 14 heraus und greifen in die nächstgelegenen Zähne der Innenverzahnung 20 ein. Als Folge davon kommt der Anschlag 36 der Vertiefung 32 gegen den Anschlag 37 des Sperrgliedes 31 zur Anlage, und gleichzeitig wandert der Lagerzapfen 23 im Langloch 33 von einer Seite zur anderen. Nun ist die Welle 14 gegenüber dem Gehäuse 10 blockiert, und weiterer Gurtauszug ist unmöglich; der angeschnallte Insasse wird vom Gurt zurückgehalten.

Die außer dem Drehmoment in Gurtzugrichtung auftretende Kraft wird in einem solchen Normalfall bei verhältnismäßig geringer Belastung über die Lagerzapfen 23, 24 an beiden Enden der Welle 14 durch die Lagerschalen 26, 27 abgefangen. Der volle Durchmesser der Gurtaufwickelwelle 14 bleibt weitestgehend erhalten, d. h. nur die für die Zähne 34 des Sperrgliedes 31 vorgesehen Austrittsöffnung der Vertiefung 32 unterbricht den Durchmesser an dieser Stelle.

Kommt es zu einem Unfall, insbesondere Zusammenstoß (Crash), und damit zum Überschreiten einer Grenzbelastung am Gurt, geben die beiden Lagerschalen 26, 27, 28, 29, elastisch oder sogar durch Zerstörung nach, und die Gurtaufwickelwelle 14 legt sich in Gurtzugrichtung auf der Seite des Sperrgliedes 31 mit ihrem äußeren Umfang an die Gehäuseverzahnung 20 an, während das außenverzahnte Ende 40 der Welle 14 auf der Seite des Schenkels 13 und der Feder 15 in die Teilverzahnung 21 eingreift und das halbe Drehmoment der Welle 14 in das Gehäuse 10 einleitet. So lange die Belastung anhält, greift das Sperrglied 31 ständig in die Verzahnung 20 ein. Bei weiterer Steigerung des Gurtzuges gibt die Welle 14 an der das Drehmoment aufnehmenden Fläche 36 durch Bruch oder Zerquetschen nach und gestattet ein noch tieferes Eindringen der Zähne 34 in die Verzahnung 20. Mit anderen Worten vergrößert sich der Schwenkwinkel alpha des Sperrgliedes 31 aufgrund der erwähnten weichen Zone der Welle 14 und gewährleistet somit eine maximale Überdeckung der betreffenden Zähne.

**Ansprüche**

1. Selbstsperrender Gurtaufroller für insbesondere Kraftfahrzeug-Sicherheitsgurte, mit einem Gehäuse (10) und einer darin axial unverschieblich und radial unter der Wirkung von Blockierkräften verschieblich gelagerten Gurtaufwickelwelle (14), die sich mit ihren Enden durch Durchtrittsöffnungen (18, 19) des Gehäuses (10, 12, 13) erstreckt und in der Ebene der Durchtrittsöffnungen (18, 19) jeweils mit einer zur Verrastung ausgebildeten Einrichtung (40, 31) versehen ist, von denen eine (31) beim Auftreten von Blockierkräften, die einen vorbestimmten Wert nicht überschreiten, in eine feste Innenverzahnung (20) einer Durchtrittsöffnung (18) eingreift und die beide beim Auftreten von die vorgenannten Blockierkräfte übersteigenden Blockierkräften unter radialer Verlagerung der Welle (14) in feste Innenverzahnungen (20, 21) beider Durchtrittsöffnungen (18, 19) eingreifen, so daß sich entweder eine einseitige oder eine doppelseitige Verrastung und damit Blockierung der Gurtaufwickelwelle (14) ergibt, dadurch gekennzeichnet, daß als die eine Verrastungseinrichtung in die betreffende Wellenstirn (30) ein exzentrisch zur Wellenachse (14) schwenkbeweglich gelagertes und mit zahnförmigen Rastvorsprüngen (34) versehenes Sperrglied (31) in einer Vertiefung (32) bündig eingebettet ist, wobei die in der Projektion der Vertiefung (32) befindliche ringförmige Umfangsfläche der. Wellenstirn (30) mit Ausnahme einer Unterbrechung zum Durchtritt der Rastvorsprünge (34) des Sperrgliedes (31) eine zentrisch in der zur Verrastung gestalteten zugeordneten Durchtrittsöffnung (18) des Gehäuses (12) angeordneten Nabe bildet, wobei die zur Aufnahme des Sperrgliedes (31) vorgesehene Vertiefung (32) im wesentlichen entsprechend der Umrißgestaltung des Sperrgliedes (31) konturiert ist und die Räume zur Bewegung des Sperrgliedes (31) bei dessen Schwenkbewegung entsprechend sektorförmig umgrenzt sind.

2. Gurtaufroller nach Anspruch 1, dadurch gekennzeichnet, daß das als flaches Stanzteil ausgebildete Sperrglied (31) nach Art eines Pendels ungefähr umgekehrt T-förmig gestaltet ist, wobei sich an einem einen freien Ende des T-Querbalkens die Rastvorsprünge (34) und an dem anderen freien Ende wenigstens ein Anschlag (37) zum Zusammenwirken mit einem Gegenanschlag (36) der Wellenstirn (30) befinden und wobei das freie Ende des aufrechten T-Balkens mittels einer entsprechenden Verdickung (38) als Drehachse für die schwenkbewegliche Aufhängung des pendelartigen Sperrgliedes (31) ausgebildet ist.

3. Gurtaufroller nach Anspruch 2, dadurch gekennzeichnet, daß in die zur Aufnahme des Sperrgliedes (31) vorgesehene Vertiefung (32) der Wellenstirn (30) eine Taillengestaltung (39) für die schwenkbare Aufhängung des pendelartigen Sperrgliedes (31) eingeformt ist.

4. Gurtaufroller nach Anspruch 2, dadurch gekennzeichnet, daß das Sperrglied (31) und die Kanten der Vertiefung (32) der Wellenstirn (30) jeweils wenigstens zwei Anschlagflächen (z. B. 36, 37) aufweisen, und zwar jeweils wenigstens eine beiderseits der Wellenachse, wobei jeweils ein Anschlagflächenpaar in den beiden Betriebsstellungen des Sperrgliedes (31) kooperiert.

5. Gurtaufroller nach Anspruch 2, dadurch gekennzeichnet, daß das Sperrglied (31) im Bereich seiner Rastvorsprünge (34) mit einem achsparallel zur Wellenachse der Welle (14) verlaufenden Stift (35) versehen ist, dar die Verbindung zwischen der die Bewegungen des Sperrgliedes (31) steuernden Vorrichtung (16), insbesondere Trägheitsscheibe, mit dem Sperrglied herstellt.

6. Gurtaufroller nach Anspruch 2, dadurch gekennzeichnet, daß die Gurtaufwickelwelle (14) an der Seite des Sperrgliedes (31 ) mit einem Lagerzapfen (23) versehen ist, der die Vertiefung (32 ) für das Sperrglied (31) durchsetzt und auch das Sperrglied (31 ) mittels eines Durchbruches (33) in demselben durchdringt, so daß das Sperrglied den Lagerzapfen übergreift und umschließt, wobei der Durchbruch (33) im Sperrglied als Langloch gestaltet ist, welches die Pendelbewegungen des Sperrgliedes in der Vertiefung gegenüber dem feststehenden Lagerzapfen gestattet.

7. Gurtaufroller, nach Anspruch 2, dadurch gekennzeichnet, daß diejenige Kante (36) der Gurtaufwickelwelle (31), gegen die sich eine entsprechende Kante (37) des Sperrgliedes (31) nach dessen Auslenkung und Einrastung in gehäusefeste Rastmittel (20) als Widerlager anlegt, mit einer durch Abbrechen oder Zerquetschen hinsichtlich des Anlagepunktes veränderlichen Gestaltung versehen ist, so daß sich dort eine in Grenzen nachgiebige Zone ergibt, die die Endstellung des Sperrgliedes (31) in Abhängigkeit von dem am Sicherheitsgurt auftretenden Kräften reguliert.

8. Gurtaufroller nach Anspruch 7, dadurch gekennzeichnet, daß die nachgiebige Kante (36) mittels entsprechender Ausnehmungen (--) durch die zwischen den Ausnehmungen in der Kantenlinie verbleibenden Werkstoffspitzen gebildet ist.

9. Gurtaufroller, nach Anspruch 2 und 6, dadurch gekennzeichnet, daß die Gurtaufwickelwelle (14) an beiden Enden mit Lagerzapfen (23, 24) versehen ist, die sich an beiden Seiten des Gurtaufrollers in Lagerschalen (26, 27) aus nachgiebigem Werkstoff abstützen, so daß die Gurtaufwickelwelle in Grenzen radial verschieblich im Gehäuse (10) angeordnet ist.

10. Gurtaufroller nach Anspruch 9, dadurch gekennzeichnet, daß die Lagerschalen (26, 27) zugleich als Aufnahme und Abdeckung für Funktionsteile des Gurtaufrollers gestaltet sind, insbesondere zur Aufnahme der Rückspulfeder ( 15) und zur Aufnahme und Abdeckung des Steuersystems ( 16) für das Sperrglied (31).

11. Gurtaufroller nach Anspruch 1 bis 10, dadurch gekennzeichnet, daß die Durchtrittsöffnung ( 19) für das dem Sperrglied ( 31) entgegengesetzte Ende der Gurtaufwickelwelle ( 14) über einen sektoralen Teil mit einer Sperrverzahnung ( 21) versehen ist.

12. Gurtaufroller nach Anspruch 11, dadurch gekennzeichnet, daß die sich über einen sektoralen Teil der Durchtrittsöffnung ( 19) erstreckende Verzahnung (21) unterschiedliche Zahntiefen hat, wobei die Zahntiefe in der Mitte des Sektors am größten ist und sich zu den beiden Seiten des Sektors hin zunehmend abflacht.

13. Gurtaufroller nach einen der Anspruch 1 Bis 12, dadurch gekennzeichnet, daß die Gurtaufwickelwelle (14), als im wesentlichen zylindrisches Gußstück ausgebildet ist, wobei die Durchmesser des Wickelkerns für das Gurtband, der Umfangsfläche der für das Sperrglied (31) vertieften Wellenstirn (30) und der an der entgegengesetzten Seite der Welle befindlichen Sperrverzahnung (40) ungefähr übereinstimmen.

14. Gurtaufroller nach Anspruch 13, dadurch gekennzeichnet, daß die beiderseitigen Lagerzapfen (23, 24) der Gurtaufwickelwelle (14) in das Wellengußstück einbezogen sind und der Lagerzapfen (24) auf der Seite der Rückspulfeder (15) mit einer Aufnahmegestaltung, insbesondere einem Schlitz (25), für das innere Federende versehen ist.

**Claims**

1. Emergency locking belt retractor, especially for motor vehicle safety belts, comprising a housing (10) and a belt winding shaft (14) mounted therein so that it is axially immovable and radially movable under the action of locking forces, said belt winding shaft extending via its ends through openings (18, 19) in the housing (10, 12, 13) and being provided in the plane of each opening (18, 19) with a locking device (40, 31), wherein one of these (31) engages a fixed internal toothing (20) of one opening (18) in the event of locking forces exceeding a predetermined value, and both of them engage fixed internal toothings (20, 21) of the two openings (18, 19), with radial displacement of the shaft (14), in the event of locking forces greater than the aforementioned locking forces, so that locking is effected either at one end or at both ends and thus the belt winding shaft (14) is blocked, characterised in that one locking device is in the form of a pivotably mounted locking member (31) eccentric in relation to the shaft axis (14) and provided with tooth-like locking projections (34), and is flush-mounted in a recess (32) in the relevant shaft end (30), wherein the annular peripheral surface of the shaft end (30) situated in the projection of the recess (32), with the exception of a gap for the passage of the locking projections (34) of the locking member (31), forms a hub arranged centrally in the associated opening (18) of the housing (12) designed for locking, wherein the recess (32) provided for receiving the locking member (31) is designed so that it corresponds substantially to the contour of the locking member (31) and the spaces for the movement of the locking member (31) upon pivotal movement thereof are appropriately defined in a sector-like manner.

2. Belt retractor according to claim 1, characterised in that the locking member (31) in the form of a flat stamped part is designed like a pendulum, approximately with an inverse T-shape, wherein the locking projections (34) are situated at one free end of the T-shaped cross-member and at least one stop (37) for cooperation with a counter-stop (36) of the shaft end (30) is situated at the other free end and wherein the free end of the upright T-shaped cross-member acts, by means of an appropriate thickened portion (38), as a pivot axis for the pivotable suspension of the pendulum-like locking member (31).

3. Belt retractor according to claim 2, characterised in that the recess (32) provided in the shaft end (30) to receive the locking member (31) is provided with a portion of reduced configuration (39) for the pivotable suspension of the pendulum-like locking member (31).

4. Belt retractor according to claim 2, characterised in that the locking member (31) and the edges of the recess (32) in the shaft end (30) each have at least two bearing surfaces (e.g. 36, 37), with at least one on either side of the shaft axis, wherein one of each pair of bearing surfaces cooperates in the two operating positions of the locking member (31).

5. Belt retractor according to claim 2, characterised in that the locking member (31) is provided, in the region of its locking projections (34), with a pin (35) extending parallel to the shaft axis of the shaft (14), said pin producing the connection between the device (16) controlling the movements of the locking member (31), especially an inertial disc, and the locking member itself.

6. Belt retractor according to claim 2, characterised in that the belt winding shaft (14) is provided with a journal pin (23) on the side of the locking member (31), said journal pin passing through the recess (32) for the locking member (31) and also penetrating into the locking member (31) by means of an opening (33) therein, so that the locking member overlaps and surrounds the journal pin, wherein the opening (33) in the locking member is in the form of an elongated hole allowing for the pendulum movements of the locking member in the recess with respect to the fixed journal pin.

7. Belt retractor according to claim 2, characterised in that that edge (36) of the belt winding shaft (14), against which a corresponding edge (37) of the locking member (31) rests in the form of an abutment after said locking member has deflected and engaged locking means (20) on the housing, is provided with a shape which can be altered with respect to the contact point by breaking off or crushing, so that a zone which is deformable within limits is produced, regulating the final position of the locking member (31) as a function of the forces occurring at the safety belt.

8. Belt retractor according to claim 7, characterised in that the deformable edge (36) is formed, by means of appropriate recesses (--), by the material spikes remaining in the edge line between the recesses.

9. Belt retractor according to claim 2, characterised in that the belt winding shaft (14) is provided at both ends with journal pins (23, 24), which are supported at either side of the belt retractor in bearing cups (26, 27) of deformable material, so that the belt winding shaft is arranged in the housing (10) so that it can move radially within limits.

10. Belt retractor according to claim 9, characterised in that the bearing cups (26, 27) are simultaneously designed to receive and cover functional parts of the belt retractor, especially to receive the rewinding spring (15) and to receive and cover the control system (16) for the locking member (31).

11. Belt retractor according to claims 1 to 10, characterised in that the opening (19) for the end of the belt winding shaft (14) opposite the locking member (31) is provided with locking toothing (21) over one sector.

12. Belt retractor according to claim 11, characterised in that the toothing (21) extending over one sector of the opening (19) has teeth of different depths, wherein the tooth depth in the centre of the sector is the greatest and the depth becomes increasingly flatter towards either side of the sector.

13. Belt retractor according to one of claims 1 to 12, characterised in that the belt winding shaft (14) is designed essentially as a cylindrical cast piece, wherein the diameters of the winding core for the belt strap, the peripheral surface of the shaft end (30), recessed for the locking member (31), and the locking toothing (40) located on the opposite end of the shaft correspond approximately to one another.

14. Belt retractor according to claim 13, characterised in that the journal pins (23, 24) on either side of the belt winding shaft (14) are integrated into the cast piece forming the shaft and the journal pin (24) on the side of the rewinding spring (15) is provided with a receiving configuration, especially a slot (25), for the inner end of the spring.

**Revendications**

1. Rétracteur de ceinture autobloquant, en particulier pour des ceintures de sécurité de véhicules automobiles, avec un boîtier (10) et dans celui-ci un arbre enrouleur (14) bloqué axialement et déplaçable radialement sous l'effet de forces de blocage, dont les extrémités sont engagées dans les orifices de passage (18, 19) du boîtier (10, 12, 13) et comportant, au niveau de chaque orifice de passage (18, 19), un dispositif d'enclenchement (40, 31), un de ces dispositifs (31) engrène avec la denture intérieure (20) fixe d'un orifice de passage (18) lorsqu'apparaissent des forces de blocage ne dépassant pas une valeur déterminée et les deux dispositifs engrènent avec les dentures intérieures fixes des deux orifices de passage lorsqu'apparaissent des forces de blocage supérieures aux forces de blocage mentionnées ci-dessus et que l'arbre (14) subit un déplacement radial d'où il résulte un enclenchement soit unilatéral ou bilatéral et par suite un blocage de l'arbre enrouleur (14), caractérisé en ce qu'un dispositif d'enclenchement dans l'about de l'arbre (30) concerné est constitué par un élément blcquant (31) excentré, pouvant osciller par rapport à l'axe de l'arbre et pourvu de saillies d'arrêt en forme de dents (34), qui est encastré de manière affleurante dans une cavité (32), la surface circulaire de l'about de l'arbre (30) se trouvant dans le prolongement de la cavité (32), à l'exception d'une interruption pour le passage des saillies d'arrêt (34) de l'élément bloquant (31), forme un moyeu centré dans l'orifice de passage (18) du boîtier (12) affecté à l'enclenchement, la cavité (32) prévue pour loger l'élément bloquant (31) est calibrée pour correspondre essentiellement au périmètre de l'élément bloquant (31) et les espaces de jeu de l'élément bloquant (31) lors de son pivotement sont délimités par des secteurs correspondants.

2. Rétracteur de ceinture selon la revendication 1, caractérisé en ce que l'élément bloquant (31) façonné comme une pièce découpée plate est conformé comme un pendule ayant environ la forme d'un T renversé, les saillies d'arrêt (34) se trouvant à l'une des extrémités libres de la barre transversale du T et au moins une butée (37) associée à une contre-butée (36) de l'about de l'arbre (30) se trouvant à l'autre extrémité libre, l'extrémité libre de la barre droite du T présentant un renflement (38) correspondant, qui sert d'axe de rotation pour le pivotement de l'élément bloquant (31) suspendu de type pendulaire.

3. Rétracteur de ceinture selon la revendication 2, caractérisé en ce qu'un logement de dimension adéquate (39) pour la suspension pivotante de l'élément bloquant (31) de type pendulaire est ménagé dans la cavité (32) de l'about de l'arbre (30) prévue pour recevoir l'élément bloquant (31).

4. Rétracteur de ceinture selon la revendication 2, caractérisé en ce que l'élément bloquant (31) et les côtés de la cavité (32) de l'about de l'arbre présentent chacun au moins deux surfaces d'arrêt (p. ex. 36, 37) et que, en fait, chacun en présente au moins une des deux côtés de l'axe de l'arbre, deux surfaces d'arrêt coopérant respectivement dans les deux positions de marche de l'élément bloquant (31).

5. Rétracteur de ceinture selon la revendication 2, caractérisé en ce que l'élément bloquant (31) est pourvu dans la zone de ses saillies d'arrêt (34) d'une goupille, dont l'axe parallèle à l'axe de l'arbre (14), établit une liaison entre le dispositif (16) commandant les mouvements de l'élément bloquant (31), en particulier le volant d'inertie, et l'élément bloquant.

6. Rétracteur de ceinture selon la revendication 2, caractérisé en ce que l'arbre enrouleur (14) est pourvu d'un tourillon (23) sur le côté de l'élément bloquant 31 qui traverse la cavité (32) de lui-même et l'élément bloquant (31) par un perçage (33) dans lequel il pénètre, de sorte que l'élément bloquant recouvre et entoure le tourillon, le trou (33) de l'élément bloquant étant conformé comme un trou oblong qui autorise les mouvements pendulaires de l'élément bloquant dans la cavité opposée au tourillon fixe.

7. Rétracteur de ceinture selon la revendication 2, caractérisé en ce que le côté (36) de l'arbre enrouleur (31) contre lequel vient reposer un côté correspondant (37) de l'élément bloquant (31) après sa déviation et son encliquetage dans le dispositif d'arrêt (20) fixé au boîtier comme butée, est pourvu d'une conformée avec point de butée modifiable par rupture ou broyage, de sorte qu'il en résulte une zone déformable dans certaines limites qui règle la fin de course de l'élément bloquant (31) en fonction des forces s'exerçant sur la ceinture de sécurité.

8. Rétracteur de ceinture selon la revendication 7, caractérisé en ce que l'arête déformable (36) est formée par l'alignement des pointes de matériau subsistant entre les évidements.

9. Rétracteur de ceinture selon les revendications 2 et 6, caractérisé en ce que l'arbre enrouleur (14) est pourvu aux deux extrémités de tourillons (23, 24), qui s'appuient des deux côtés du rétracteur sur des coquilles de coussinet en matériau déformable (26, 27) de sorte que l'arbre enrouleur peut se déplacer radialement dans certaines limites à l'intérieur du boîtier.

10. Rétracteur selon la revendication 9, caractérisé en ce que les coquilles de coussinet (26, 27) sont conformées à la fois comme logement et couvercle pour des parties fonctionnelles du rétracteur, en particulier pour loger le ressort de rebobinage (15) et pour loger et couvrir le système de commande (16) de l'élément bloquant (31).

11. Rétracteur selon les revendications 1 à 10, caractérisé en ce que l'orifice de passage (19) pour l'extrémité de l'arbre enrouleur (14) opposée à l'élément bloquant (31) est pourvu sur un secteur d'une denture de blocage (21).

12. Rétracteur selon la revendication 11, caractérisé en ce que la denture (21) qui s'étend sur un secteur de l'orifice de passage (19) a une profondeur variable, la profondeur étant plus importante au milieu du secteur et diminuant de plus en plus sur les deux côtés du secteur.

13. Rétracteur selon l'une des revendications 1 à 12, caractérisé en ce que l'arbre enrouleur (14) est conformé essentiellement comme une pièce coulée cylindrique, le diamètre de l'axe d'enroulement de la sangle, la surface de la face de l'arbre (30) évidée pour l'élément bloquant (31) et la denture de blocage (40) située sur le côté oppcsé à l'arbre devant s'ajuster approximativement.

14. Rétracteur selon la revendication 13, caractérisé en ce que les tourillons (23, 24) latéraux de l'enrouleur (14) sont intégrés dans la pièce coulée de l'arbre et le tourillon (24) sur le côté du ressort de rebobinage (15) est pourvu d'un logement, en particulier une fente (25), pour l'extrémité intérieure du ressort.

# Fig.1

**Fig.2**

Fig.3

13

**Fig.4**

Fig. 5